# EUROPEAN PATENT APPLICATION

(11) **EP 4 793 293 A1**
(43) Date of publication of application: **19.08.2026**
(21) Application number: 24877601.5
(22) Date of filing: 08.10.2024
(51) Int. Cl.: C08B 37/00, C08J 3/12, C08J 5/22

(54) **POROUS AGAR OR AGAROSE BEADS AND METHOD FOR MANUFACTURING SAME**

(30) Priority: 13.10.2023 KR 20230136927
(71) Applicant: PurioGen Inc, Yeosu-si, Jeollanam-do 59616 (KR)
(72) Inventor: BYUN, Jang-Woong, Seoul 08511 (KR); KIM, Kyoung-Min, Seoul 08511 (KR); KIM, Il-Gwon, Seoul 08511 (KR); YOON, Seo-Ro, Seoul 08511 (KR); HA, Joon-Soo, Seoul 08511 (KR); KWON, Dae-Beom, Seoul 08511 (KR)
(74) Representative: Reddie & Grose LLP
(86) International application number: PCT/KR2024/096239
(87) International publication number: WO 2025/080066

(57) **Abstract**

Provided are a manufacturing method of a porous agar or agarose bead comprising: preparing an aqueous solution of agar or agarose by dissolving agar or agarose in water; polymerizing by introducing an organic solvent and an aqueous surfactant solution into the aqueous solution of agar or agarose; manufacturing a spherical agar or agarose gel by solidifying an emulsion formed by the polymerization reaction; washing and recovering the agar or agarose gel; and obtaining an agar or agarose bead by crosslinking the agar or agarose gel; and a porous agar or agarose bead.

## Description

### BACKGROUND OF THE INVENTION

### (a) Field of the Invention

The present disclosure relates to a porous agar or agarose bead and a manufacturing method thereof.

### [Background Art]

Agarose beads have been used as a stationary phase in chromatographic separation of proteins and other biomacromolecules for decades. It is typically manufactured by inverse suspension gelation, in which a high-temperature aqueous solution of agarose is emulsified in a high-temperature oil phase to form a water-in-oil (W/O) emulsion. The emulsion is then cooled to less than the gelation temperature of agarose to generate a gel, which may then be recovered and used for separation purposes.

In the process of forming the W/O emulsion, it is essential to use a surfactant to stabilize the emulsion. Generally, most of the surfactants used in the process of forming the W/O emulsion have lipophilicity, and thus the lipophilic surfactant is used as an organic solution dissolved in an organic solvent such as toluene or xylene. However, since the organic solvent such as toluene or xylene has a risk of causing a harmful effect on the human body, there have been attempts to use water instead of the organic solvent in a process where the organic solvent does not necessarily have to be used, for example, a washing process. Specifically, by washing only with water after forming the W/O emulsion, an amount of the harmful organic solvent used may be reduced and eco-friendliness may also be improved.

Meanwhile, in order for the surfactant to be easily removed when washing only with water after forming the W/O emulsion, there has also been an attempt to reduce the concentration of the surfactant used, but in this case, there are problems such that the W/O emulsion is not well formed or an amount thereof is too small even if formed.

However, all of these existing attempts had a strong purpose of lowering the risk of an operator being exposed to a harmful substance in the process by minimizing the use of an organic solvent harmful to the human body, and only incidentally obtained effects such as improving processability and controlling the shape of the bead to be closer to a spherical shape.

In other words, until now, improvement in a working environment and eco-friendliness has been achieved through changes in a manufacturing process of the agarose bead, and incidentally, effects such as improving processability or quality of the finally manufactured agarose bead were able to be pursued. Here, the quality of the agarose bead means size control of the agarose bead. Since the finally manufactured agarose bead is widely used as a resin for separation and purification of biomaterials, it is a fact that there is usually much interest in the size of the manufactured agarose bead. This is because more efficient separation and purification may be possible only when the size of the agarose bead is appropriately controlled. However, since the resin serves as a stationary phase in chromatography and the agarose bead has a porous structure, even if the size of the agarose bead is appropriately controlled, affinity between the agarose bead and a sample passing therethrough is affected by the porous structure (that is, the affinity is increased), so that there is a concern that a flow velocity of the sample becomes too slow. The slow flow velocity of the sample also means that the durability of the bead is low.

In addition, existing research concerning beads was exclusively on agarose beads, and there was almost no research on agar beads manufactured using agar rather than agarose.

Accordingly, the present inventors have started research and development on a method for improving the flow velocity by focusing on the porous structure of the agar or agarose bead, which has not been noticed by people so far, and finally came to complete the present invention after going through too many trials and errors and failures.

### [Technical Problem]

In an embodiment, by controlling the pore volume of the porous agar or agarose bead to improve the durability of the bead, a manufacturing method for a porous agar or agarose bead capable of well withstanding even at a high flow velocity is provided.

Another embodiment is for providing a porous agar or agarose bead.

### [Technical Solution]

According to an embodiment, provided is a method for manufacturing a porous agar or agarose bead comprising: preparing an aqueous solution of agar or agarose by dissolving agar or agarose in water; polymerizing by introducing an organic solvent and an aqueous surfactant solution into the aqueous solution of agar or agarose; manufacturing a spherical agar or agarose gel by solidifying an emulsion formed by the polymerization reaction; washing and recovering the agar or agarose gel; and obtaining an agar or agarose bead by crosslinking the agar or agarose gel.

The polymerizing step may include introducing the organic solvent into the aqueous solution of agar or agarose, and introducing the aqueous surfactant solution after introducing the organic solvent.

The surfactant may include a water-soluble group.

The surfactant including the water-soluble group may be represented by Chemical Formula 1 below.

[Chemical Formula 1] R¹-O-L¹-O-R²

In Chemical Formula 1,
R1 is a substituted or unsubstituted C1 to C20 alkyl group,
R², being a water-soluble group, is *-P(=O)(OH)₂, and
L1 is a substituted or unsubstituted C1 to C20 alkylene group.

The aqueous solution of agar or agarose is a mixed solution of water and an agar or agarose powder, and the water and the agar or agarose powder in the mixed solution may have a weight ratio of 14:1 to 5:1.

The aqueous surfactant solution is a mixed solution of water and the surfactant, and the water and the surfactant in the mixed solution may have a weight ratio of 2:1 to 10:1.

The organic solvent used in the polymerization step may be introduced into the aqueous solution of agar or agarose at a weight less than or equal to 10 times the weight of the aqueous surfactant solution.

The organic solvent may include toluene.

The emulsion may be a water-in-oil emulsion.

The crosslinking of the agar or agarose gel may include introducing a first crosslinking agent to the agar or agarose gel, and subsequently introducing a second crosslinking agent.

The first crosslinking agent and the second crosslinking agent may have different structures from each other.

The first crosslinking agent and the second crosslinking agent may each independently include a halogen element.

The first crosslinking agent may be represented by Chemical Formula 2 below.

[Chemical Formula 2] CH₂=CH-L²-X

In Chemical Formula 2,
L2 is a substituted or unsubstituted C1 to C20 alkylene group, and
X is a halogen element.

The second crosslinking agent may be represented by Chemical Formula 3 below.

[Chemical Formula 3] X2

In Chemical Formula 3,
X is a halogen element.

The halogen element may be Br.

Another embodiment provides a porous agar or agarose bead satisfying Equation 1 below. $84 < \left(A\times B\right) + 0.84$
(A: flow velocity when a pressure reaches 0.1 MPa (unit is cm/h)
B: average pore volume (unit is cm³/g)

The porous agar or agarose bead may satisfy Equation 2 below. $300 < A - B$
(A: flow velocity when a pressure reaches 0.1 MPa (unit is cm/h)
B: average pore volume (unit is cm³/g)

The porous agar or agarose bead may satisfy Equation 3 below. $306 < A + B$
(A: flow velocity when a pressure reaches 0.1 MPa (unit is cm/h)
B: average pore volume (unit is cm³/g)

The porous agar or agarose bead may have a flow velocity of greater than or equal to 290 cm/h when the pressure reaches 0.1 MPa.

The porous agar or agarose bead may have a flow velocity of greater than or equal to 297 cm/h when the pressure reaches 0.1 MPa.

Pores in the porous agar or agarose bead may have a pore volume greater than or equal to 0.2 cm³/g.

Pores in the porous agar or agarose bead may have a pore volume greater than or equal to 0.28 cm³/g.

Another embodiment provides a porous agar or agarose bead manufactured by the manufacturing method.

According to another embodiment, provided is a porous agar or agarose bead having a Dv50 less than or equal to 65 µm and satisfying Equation 1 below. $84 < \left(A\times B\right) + 0.84$
(A: flow velocity when a pressure reaches 0.1 MPa (unit is cm/h)
B: average pore volume (unit is cm³/g)

The porous agar or agarose bead may satisfy Equation 2 below. $300 < A - B$
(A: flow velocity when a pressure reaches 0.1 MPa (unit is cm/h)
B: average pore volume (unit is cm³/g)

The porous agar or agarose bead may satisfy Equation 3 below. $306 < A + B$
(A: flow velocity when a pressure reaches 0.1 MPa (unit is cm/h)
B: average pore volume (unit is cm³/g)

The porous agar or agarose bead having a Dv50 less than or equal to 65 µm may have a flow velocity greater than or equal to 290 cm/h when a pressure reaches 0.1 MPa.

The porous agar or agarose bead having a Dv50 less than or equal to 65 µm may have a flow velocity greater than or equal to 297 cm/h when a pressure reaches 0.1 MPa.

Pores in the porous agar or agarose bead having a Dv50 less than or equal to 65 µm may have a pore volume greater than or equal to 0.2 cm³/g.

Pores in the porous agar or agarose bead having a Dv50 less than or equal to 65 µm may have a pore volume greater than or equal to 0.28 cm³/g.

According to another embodiment, provided is a porous agar or agarose bead having a Dv50 greater than or equal to 90 µm and satisfying Equation 4, Equation 5, or Equation 6 below. $300 < \left(A\times B\right) + 15$
(A: flow velocity when a pressure reaches 0.1 MPa (unit is cm/h)
B: average pore volume (unit is cm³/g) $690 < A - B$
(A: flow velocity when a pressure reaches 0.1 MPa (unit is cm/h)
B: average pore volume (unit is cm³/g) $744 < A + B$
(A: flow velocity when a pressure reaches 0.1 MPa (unit is cm/h)
B: average pore volume (unit is cm³/g)

The porous agar or agarose bead having a Dv50 of greater than or equal to 90 µm may have a flow velocity of greater than or equal to 500 cm/h when a pressure reaches 0.1 MPa.

The porous agar or agarose bead having a Dv50 of greater than or equal to 90 µm may have a flow velocity of greater than or equal to 600 cm/h when a pressure reaches 0.1 MPa.

The porous agar or agarose bead having a Dv50 of greater than or equal to 90 µm may have a flow velocity of greater than or equal to 700 cm/h when a pressure reaches 0.1 MPa.

The pores in the porous agar or agarose bead having a Dv50 of greater than or equal to 90 µm may have a pore volume of greater than or equal to 0.3 cm³/g.

The pores in the porous agar or agarose bead having a Dv50 of greater than or equal to 90 µm may have a pore volume of greater than or equal to 0.4 cm³/g.

The pores in the porous agar or agarose bead having a Dv50 of greater than or equal to 90 µm may have a pore volume of greater than or equal to 0.5 cm³/g.

The pore in the porous agar or agarose bead having a Dv50 of greater than or equal to 90 µm may have a pore volume of greater than or equal to 0.6 cm³/g.

### [Advantageous Effects]

A manufacturing method of a porous agar or agarose bead according to an embodiment may control a pore volume of pores in a porous structure of the agar or agarose by using water in which a lipophilic surfactant modified with a water-soluble group is dissolved instead of an organic solution in which a conventionally used lipophilic surfactant is dissolved, and the porous agar or agarose bead having the pore volume controlled as such may be controlled to respectively satisfy specific equations different from each other depending on a particle diameter, and may thereby have excellent durability that withstands well even at a fast flow velocity.

### BRIEF DESCRIPTION OF THE DRAWINGS

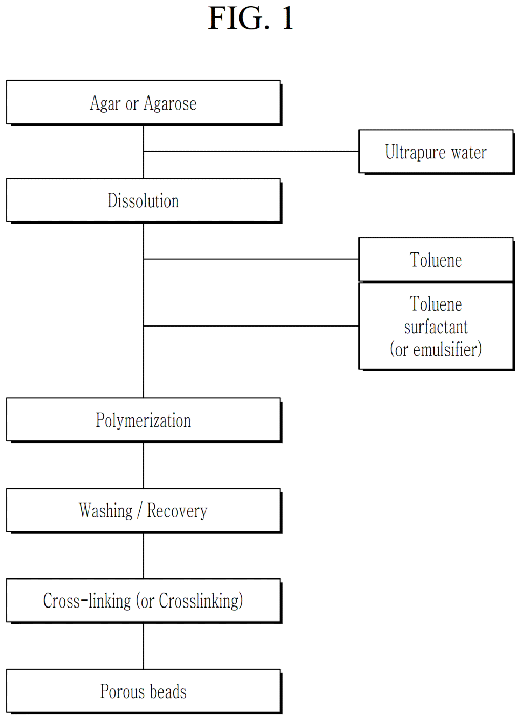

FIG. 1 is a conventional manufacturing method of a porous agar or agarose bead, using an organic solution in which a lipophilic surfactant is dissolved.

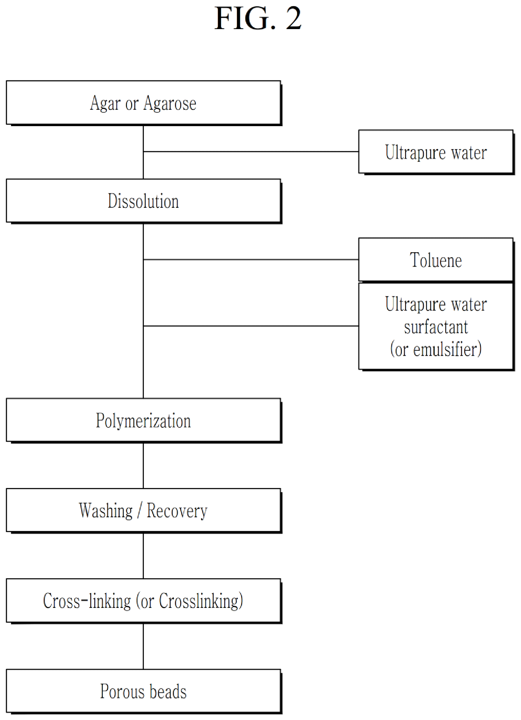

FIG. 2 is a manufacturing method of a porous agar or agarose bead according to an embodiment, using water in which a lipophilic surfactant modified with a water-soluble group is dissolved.

### [Best Mode]

Hereinafter, embodiments of the present invention will be described in detail so that those of ordinary skill in the art to which the present invention pertains may easily implement them. However, the present invention may be implemented in various different forms and is not limited to the embodiments described herein.

Unless otherwise specified in the present specification, an "alkyl group" means a C1 to C20 alkyl group, an "alkenyl group" means a C2 to C20 alkenyl group, a "cycloalkenyl group" means a C3 to C20 cycloalkenyl group, a "heterocycloalkenyl group" means a C3 to C20 heterocycloalkenyl group, an "aryl group" means a C6 to C20 aryl group, an "arylalkyl group" means a C6 to C20 arylalkyl group, an "alkylene group" means a C1 to C20 alkylene group, an "arylene group" means a C6 to C20 arylene group, an "alkylarylene group" means a C6 to C20 alkylarylene group, a "heteroarylene group" means a C3 to C20 heteroarylene group, and an "alkoxylene group" means a C1 to C20 alkoxylene group.

Unless otherwise specified in the present specification, "substituted" means that at least one hydrogen atom is substituted with a substituent selected from a halogen atom (F, Cl, Br, I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

In addition, unless otherwise specified in the present specification, "hetero" means that at least one hetero atom selected from the group consisting of N, O, S, and P is included in a chemical formula.

In addition, unless otherwise specified in the present specification, "(meth)acrylate" means both "acrylate" and "methacrylate", and "(meth)acrylic acid" means both "acrylic acid" and "methacrylic acid".

Unless otherwise specified in the present specification, "combination" means mixing or copolymerization.

Unless otherwise specified in the present specification, "polymerization" or "polymerization reaction" means "emulsification" or "emulsification reaction".

Unless otherwise defined in chemical formulas in the present specification, when a chemical bond is not drawn at a position where a chemical bond should be drawn, it means that a hydrogen atom is bonded to the position.

In the present specification, when a portion such as a layer, a film, a region, or a plate is referred to as being "on" another portion, it includes not only the case where it is "directly on" the other portion but also the case where there is another portion in between. Conversely, when a certain portion is referred to as being "directly on" another portion, it means that there is no other portion in between.

Hereinafter, a porous agar or agarose bead and a manufacturing method thereof according to an embodiment will be described.

A manufacturing method for a porous agar or agarose bead according to an embodiment comprises: dissolving agar or agarose in water to prepare an aqueous solution of agar or agarose; adding an organic solvent and an aqueous surfactant solution to the aqueous solution of agar or agarose to polymerize the agar or agarose; solidifying an emulsion formed by the polymerization reaction to prepare a spherical agar or agarose gel; washing and recovering the agar or agarose gel; and crosslinking the agar or agarose gel to obtain an agar or agarose bead.

In general, since an organic solvent such as toluene, which is classified as a hazardous material, is necessarily used when manufacturing an agarose bead, there has been a steady need to reduce the amount of such hazardous materials used, and a lot of research and development on related processes have been conducted in accordance with such a need. However, as research and development have been relatively concentrated to meet the above need, research and development on other portions have rarely been conducted.

During actual work, a worker's working environment is also important, but the performance of a chromatography system made using the manufactured beads is also very important. An agar or agarose bead manufactured according to an embodiment has a porous structure, and the performance of the chromatography may be improved or degraded by the porous structure. Specifically, the pore volume of the pore in the porous structure is associated with the durability of the agar or agarose bead having the porous structure, and the durability is associated with the flow velocity of the chromatography having the bead as a stationary phase. That is, a bead having excellent durability may implement a chromatography having a fast flow velocity, but conversely, a bead having inferior durability may only implement a chromatography having a slow flow velocity. According to an embodiment, a method that may control the pore volume of pores in a porous agar or agarose bead, to which no one has paid much attention in the related art, specifically to greater than or equal to 0.2 cm³/g, more specifically to greater than or equal to 0.25 cm³/g, and even more specifically to greater than or equal to 0.3 cm³/g, is provided, and the porous agar or agarose bead in which the pore volume of the pores is controlled through the method may have excellent durability, and may improve flow velocity performance of a chromatography having the same as a stationary phase, that is, may enable implementation of a chromatography having a fast flow velocity.

Meanwhile, agar and agarose are different materials from each other. Specifically, agar means hancheon (agar-agar), and agarose is made by removing agaropectin from the agar. Agar and agarose have different physicochemical properties as shown in Table 1 below, and thus a manufacturing method of an agarose bead may not be completely identical to a manufacturing method of an agar bead.

**[Table 1]**

| Properties and applications | Agar | Agarose |
|---|---|---|
| Gel strength | High | Low |
| Transparency | Translucent | Transparent |
| Melting point | High | Low |
| Applications | Used as a solidifying agent in biological culture media or as a thickener in the food industry | Widely used in molecular biology techniques such as gel electrophoresis to separate and analyze DNA, RNA, and proteins |

The present application is clearly differentiated from the prior art in that it provides a manufacturing method having the above-described effects for both a porous agar bead manufactured using an agar powder and a porous agarose bead manufactured using an agarose powder.

Hereinafter, each step will be described in detail.

A step of dissolving agar or agarose in water to prepare an aqueous solution of agar or agarose

Agar or agarose is dissolved in water to prepare an aqueous solution of agar or an aqueous solution of agarose. At this time, the agar or the agarose may each be in a powder form.

The aqueous solution of agar or the aqueous agarose solution needs to react together with an organic solvent and an aqueous surfactant solution, which will be described later, to form a polymer, that is, a W/O emulsion, and in order to form the W/O emulsion well, the water and the agar or agarose powder dissolved in the water may be advantageously mixed at a weight ratio of 14:1 to 5:1. Specifically, the water and the agarose powder may be mixed at a weight ratio of 14:1 to 5:1 to prepare an aqueous agarose solution, and the water and the agar powder may be mixed at a weight ratio of 13:1 to 8:1 to prepare an aqueous agar solution. The water and the agar or agarose powder must be mixed within the weight ratio range for the polymerization reaction to smoothly occur together with an organic solvent and an aqueous surfactant solution, both of which will be described later, so that a W/O emulsion may be easily formed. Usually, controlling the mixing weight ratio of water and the agar or agarose powder was a poorly considered portion, but since the present application uses a surfactant dissolved in water rather than a surfactant dissolved in an organic solvent such as toluene as described above, making the polymerization reaction for forming the W/O emulsion occur well is the key, and the present inventors have completed the present invention after confirming that a delay of the polymerization reaction may be prevented by controlling the concentration of the aqueous solution of agar or the aqueous agarose solution.

On the premise of the controlled weight ratio, the agar or agarose powder may be added to water, heated to a temperature greater than or equal to 105°C, for example, a temperature of 105°C to 150°C, for example, a temperature of 110°C, and dissolved for about 6 hours to 10 hours to prepare an aqueous solution of agar or agarose. The temperature may also be one of the important factors in the present invention. Conventionally, since a surfactant dissolved in an organic solvent was used, a W/O emulsion was easily formed even when dissolving the agar or agarose powder at a temperature less than or equal to 100°C, but since the present application uses a surfactant dissolved in water rather than an organic solvent, the temperature at which the agar or agarose powder is dissolved in water must also be raised to a temperature greater than 100°C, for example, a temperature of about 110°C, to easily form a W/O emulsion.

A step of polymerizing by introducing an organic solvent and an aqueous surfactant solution into the aqueous solution of agar or agarose

The step of polymerizing may include a step of introducing the organic solvent into the aqueous solution of agar or agarose and a step of introducing the aqueous surfactant solution after introducing the organic solvent. That is, introducing the organic solvent first and introducing the aqueous surfactant solution (a surfactant dissolved in water) later may be advantageous in terms of forming a W/O emulsion. If the order is reversed, that is, if the aqueous surfactant solution is introduced first into the aqueous solution of agar or agarose, and then the organic solvent is subsequently introduced, the W/O emulsion may not be well formed.

For example, the organic solvent introduced first may have a temperature of 50°C to 90°C. By limiting the temperature of the organic solvent introduced first, the polymerization reaction with the subsequently introduced aqueous surfactant solution may smoothly occur. In this case, when the temperature of the subsequently introduced aqueous surfactant solution is adjusted to be the same as the temperature of the organic solvent introduced first, the polymerization reaction may occur more smoothly.

For example, the surfactant may include a water-soluble group.

For example, the surfactant including the water-soluble group may be represented by Chemical Formula 1 below.

[Chemical Formula 1] R¹-O-L¹-O-R²

In Chemical Formula 1,
R1 is a substituted or unsubstituted C1 to C20 alkyl group,
R², being a water-soluble group, is *-P(=O)(OH)₂, and
L1 is a substituted or unsubstituted C1 to C20 alkylene group.

As described above, most of the surfactants used in manufacturing agar or agarose beads are lipophilic surfactants, and thus, it is also general to use an organic solvent such as toluene as a solvent for dissolving them. In contrast, since a manufacturing method according to an embodiment dissolves a lipophilic surfactant in water instead of the organic solvent, various changes in process configuration are inevitably essential.

In addition to the changes in the process configuration, furthermore, in order for a porous agar or agarose bead manufactured by a manufacturing method according to an embodiment to have more excellent durability, the structure of the (lipophilic) surfactant is partially modified. For example, by modifying the (lipophilic) surfactant to include a water-soluble group, it may be better dissolved in water, which is a solvent, and this may ultimately help in effectively forming a W/O emulsion.

Specifically, the structure of the surfactant modified to include the water-soluble group may be represented by Chemical Formula 1.

Looking at the structure of Chemical Formula 1, the remaining structure excluding R2 is composed only of oxygen atoms, carbon atoms, and hydrogen atoms. In this case, the number of the oxygen atoms is fixed to two, and an alkylene group must be positioned between the two oxygen atoms. Since the surfactant has such structural characteristics, even when dissolved in water instead of an organic solvent, it effectively forms a W/O emulsion, thereby making it possible to ultimately manufacture a porous bead having a controlled pore volume and excellent durability.

For example, in Chemical Formula 1, when R², which is a water-soluble group, is *-P(=O)(OH)₂, it may be advantageous in terms of controlling the pore volume of the pores in the manufactured porous bead and enhancing durability of the porous bead, compared to other water-soluble groups.

For example, the aqueous surfactant solution, which is a mixed solution of water and the surfactant, may be a mixed solution in which water and the surfactant are mixed at a weight ratio of 2:1 to 10:1. When the composition of the aqueous surfactant solution is controlled as described above, the pore volume of the pores in the manufactured porous bead may be easily controlled to greater than or equal to 0.2 cm³/g, thereby manufacturing a porous bead having excellent durability. Specifically, when the aqueous surfactant solution and the organic solvent are mixed with the aforementioned aqueous agarose solution to cause a polymerization reaction, water and the surfactant in the aqueous surfactant solution may be mixed in a weight ratio of 2:1 to 5:1, and when the aqueous surfactant solution and the organic solvent are mixed with the aforementioned aqueous agar solution to cause a polymerization reaction, water and the surfactant in the aqueous surfactant solution may be mixed in a weight ratio of 2:1 to 10:1.

For example, the organic solvent used in the polymerization step may be introduced into the aqueous solution of agar or agarose in an amount by weight of 10 times or less the weight of the aqueous surfactant solution. The organic solvent and the aqueous surfactant solution are sequentially introduced into an aqueous agar solution or an aqueous agarose solution, and in this case, when the weight of the organic solvent and the aqueous surfactant solution is controlled as described above, the manufacture of a porous bead having more excellent durability may be possible. For example, when the organic solvent is introduced into the aqueous agarose solution, the organic solvent may be introduced at a weight less than or equal to 9 times the weight of the aqueous surfactant solution, and when the organic solvent is introduced into the aqueous agar solution, the organic solvent may be introduced at a weight less than or equal to 10 times the weight of the aqueous surfactant solution.

For example, the organic solvent may include toluene and xylene, but is not necessarily limited thereto.

A step of solidifying the emulsion formed by the polymerization reaction to manufacture a spherical agar or agarose gel

The polymer emulsion produced through the polymerization reaction may be a W/O emulsion. The water-in-oil (W/O) emulsion may be obtained as a polymer precipitate. When the temperature is lowered to less than the gelation temperature of the agar or agarose, for example, less than or equal to about 30°C after the polymerization reaction, layer separation occurs, and the precipitate may be obtained from the lower layer among the two separated layers, namely, the upper layer and the lower layer. The polymer, which is the precipitate thus obtained, that is, the water-in-oil (W/O) emulsion, since it is already obtained at a temperature less than or equal to the melting point of the agar or agarose, is obtained in a spherical solidified state. However, even if it is solidified, it is not in a completely hardened state, and thus, when external pressure is applied, it exists in a gel state which may undergo a shape change. That is, a spherical agar or agarose gel is obtained.

The step of washing and recovering the said agar or agarose gel

The spherical agar or agarose gel is cleanly washed with water and recovered. As described above, since a surfactant dissolved in water, rather than a surfactant dissolved in an organic solvent, is used, it may be cleanly washed and recovered even with water.

Crosslinking the agar or agarose gel to obtain an agar or agarose bead

The washed and recovered agar or agarose gel is crosslinked to finally obtain a porous agar or agarose bead.

For example, the step of crosslinking the agar or agarose gel may include introducing a first crosslinking agent to the agar or agarose gel, and subsequently introducing a second crosslinking agent.

For example, the first crosslinking agent and the second crosslinking agent may have different structures from each other.

In the crosslinking step, the crosslinking may be performed using only a single crosslinking agent, and conventionally, crosslinking by adding epichlorohydrin was prior art. However, in a manufacturing method according to an embodiment, since the surfactant is used in a state dissolved in water rather than an organic solvent, when only a single epichlorohydrin crosslinking agent is used, a crosslink may not be well formed.

However, as described below, by sequentially adding different crosslinking agents including Br, the crosslinking may be well formed, thereby it may be possible to manufacture an agar or agarose bead having excellent durability. In addition, according to an embodiment, a ligand may be easily connected onto a finally manufactured agar or agarose bead only when the crosslinking agent having the structure is used.

For example, the first crosslinking agent and the second crosslinking agent may each independently include a halogen element. In this case, the halogen element may be Br. When the first crosslinking agent and the second crosslinking agent include Br, it may be advantageous in terms of reinforcing the durability of the porous bead compared to a case of including other halogen elements (F, Cl, I).

For example, the first crosslinking agent may be represented by Chemical Formula 2 below, and the second crosslinking agent may be represented by Chemical Formula 3 below.

[Chemical Formula 2] CH₂=CH-L²-X

[Chemical Formula 3] X2

In Chemical Formula 2 and Chemical Formula 3,
L2 is a substituted or unsubstituted C1 to C20 alkylene group, and
X is a halogen element.

In addition, just as the input order of the organic solvent and the aqueous surfactant solution was important in the polymerizing step, the order of the first crosslinking agent and the second crosslinking agent is also important in the crosslinking step. That is, introducing the first crosslinking agent represented by Chemical Formula 1 first and subsequently introducing the second crosslinking agent represented by Chemical Formula 2 may be advantageous in terms of controlling a pore volume of pores in the porous bead and reinforcing the durability of the porous bead, compared to a case of introducing the second crosslinking agent first and subsequently introducing the first crosslinking agent.

A porous agar or agarose bead according to another embodiment satisfies Equation 1 below. $84 < \left(A\times B\right) + 0.84$
(A: flow velocity when a pressure reaches 0.1 MPa (unit is cm/h)
B: average pore volume (unit is cm³/g)

Specifically, a porous agar or agarose bead according to an embodiment may satisfy Equation 2 below. $300 < A - B$
(A: flow velocity when a pressure reaches 0.1 MPa (unit is cm/h)
B: average pore volume (unit is cm³/g)

More specifically, a porous agar or agarose bead according to an embodiment may satisfy Equation 3 below. $306 < A + B$
(A: flow velocity when a pressure reaches 0.1 MPa (unit is cm/h)
B: average pore volume (unit is cm³/g)

As the porous agar or agarose bead according to an embodiment satisfies the equation, weak durability, which is a problem of a conventional porous agar or agarose bead, may be greatly improved. Generally, a porous agar or agarose bead has a soft and flexible structure, and thus mechanical strength, that is, durability, is inevitably relatively weak, and although there have been attempts to increase an input concentration of agar or agarose when manufacturing the agar or agarose bead to strengthen the durability, in this case, there is a problem that a pore size of the porous agar or agarose bead inevitably decreases, thereby offsetting a durability improvement effect. Accordingly, a strength improvement effect is sometimes sought by a method such as freeze-drying a crosslinked agar or agarose bead, but all agar or agarose beads currently commercially available have a fatal limitation of being very vulnerable to high-pressure conditions. After clearly recognizing the limitations of the porous agar or agarose bead as described above, the present inventors have made repeated extensive efforts to improve the durability of the porous agar or agarose bead having many advantages in various ways and particularly to have excellent durability even under a high-pressure condition, and as a result, finally experimentally confirmed that the durability of the agar or agarose bead may be dramatically improved even under the high-pressure condition by controlling the pressure, the flow velocity, and the average pore volume in the bead, and thus completed the present invention.

For example, pores in the porous agar or agarose bead may have a pore volume greater than or equal to 0.2 cm³/g, for example, greater than or equal to 0.28 cm³/g.

For example, the porous agar or agarose bead may have a flow velocity greater than or equal to 290 cm/h, for example, greater than or equal to 297 cm/h, when a pressure reaches 0.1 MPa.

Through the control of the three factors as described above, the agar or agarose bead may acquire very excellent durability under a high-pressure condition such as 0.1 MPa while having a porous structure.

The pore volume of pores in the porous agar or agarose bead must be controlled to the range so that the finally manufactured porous agar or agarose bead may have very high durability under the pressure.

Another embodiment provides a porous agar or agarose bead manufactured by the manufacturing method.

The porous agar or agarose bead according to another embodiment has a Dv50 less than or equal to 65 µm and satisfies Equation 1 below. $84 < \left(A\times B\right) + 0.84$
(A: flow velocity when a pressure reaches 0.1 MPa (unit is cm/h)
B: average pore volume (unit is cm³/g))

Specifically, a porous agar or agarose bead according to an embodiment may have a Dv50 less than or equal to 65 µm and satisfy Equation 2 below. $300 < A - B$
(A: flow velocity when a pressure reaches 0.1 MPa (unit is cm/h)
B: average pore volume (unit is cm³/g)

More specifically, a porous agar or agarose bead according to an embodiment may have a Dv50 less than or equal to 65 µm and satisfy Equation 3 below. $306 < A + B$
(A: flow velocity when a pressure reaches 0.1 MPa (unit is cm/h)
B: average pore volume (unit is cm³/g)

The porous agar or agarose bead according to another embodiment has a Dv50 greater than or equal to 90 µm, for example, 90 µm to 150 µm, and satisfies Equation 4 below. $300 < \left(A\times B\right) + 15$
(A: flow velocity when a pressure reaches 0.1 MPa (unit is cm/h)
B: average pore volume (unit is cm³/g)

Specifically, a porous agar or agarose bead according to an embodiment may have a Dv50 greater than or equal to 90 µm and satisfy Equation 2 below. $690 < A - B$
(A: flow velocity when a pressure reaches 0.1 MPa (unit is cm/h)
B: average pore volume (unit is cm³/g)

More specifically, a porous agar or agarose bead according to an embodiment may have a Dv50 greater than or equal to 90 µm and satisfy Equation 6 below. $744 < A + B$
(A: flow velocity when a pressure reaches 0.1 MPa (unit is cm/h)
B: average pore volume (unit is cm³/g)

By satisfying Equation 1, Equation 2, and/or Equation 3 with a porous agar or agarose bead having a Dv50 less than or equal to 65 µm, and also by satisfying Equation 4, Equation 5, and/or Equation 6 with a porous agar or agarose bead having a Dv50 greater than or equal to 90 µm, it may be very easy to control the pore volume in the porous agar or agarose bead to be greater than or equal to 0.2 cm3/g, greater than or equal to 0.3 cm3/g, for example, greater than or equal to 0.4 cm3/g, for example, greater than or equal to 0.5 cm3/g, for example, greater than or equal to 0.6 cm3/g, which may ultimately greatly help improve the durability of the finally manufactured porous agar or agarose bead.

As the porous agar or agarose bead satisfies the equation according to its volume average diameter, that is, the Dv value, the weak durability, which is a problem of a conventional porous agar or agarose bead, may be greatly improved. Generally, a porous agar or agarose bead has a soft and flexible structure, and thus mechanical strength, that is, durability, is inevitably relatively weak, and although there have been attempts to increase an input concentration of agar or agarose when manufacturing the agar or agarose bead to enhance the durability, in this case, there is a problem that a pore size of the porous agar or agarose bead inevitably decreases, thereby offsetting a durability improvement effect. Accordingly, a strength improvement effect is sometimes attempted by a method such as freeze-drying a crosslinked agar or agarose bead, but all agar or agarose beads currently commercially available have a fatal limitation of being very vulnerable to high-pressure conditions. After clearly recognizing the limitations of the porous agar or agarose bead as described above, the present inventors, as a result of numerous and repeated efforts to improve the durability of the porous agar or agarose bead having many advantages in various ways, in particular, to have excellent durability even under a high-pressure condition, finally experimentally confirmed that the durability of the porous agar or agarose bead may be dramatically improved even under a high-pressure condition by controlling the pressure, the flow velocity, and the average pore volume in the bead for each volume average diameter (Dv), that is, an average particle diameter based on a volume, of the porous agar or agarose bead, and thus have completed the present invention.

For example, pores in the porous agar or agarose bead may have a pore volume greater than or equal to 0.2 cm³/g, for example, greater than or equal to 0.28 cm³/g, for example, greater than or equal to 0.3 cm³/g, for example, greater than or equal to 0.4 cm³/g, for example, greater than or equal to 0.5 cm³/g. Specifically, the Dv of the porous agar or agarose bead may be less than or equal to 65 µm, wherein pores in the porous agar or agarose bead may have a pore volume greater than or equal to 0.2 cm³/g, for example, greater than or equal to 0.25 cm³/g, for example, greater than or equal to 0.28 cm³/g. In addition, the Dv of the porous agar or agarose bead may be greater than or equal to 90 µm, and at this time, pores in the porous agar or agarose bead may have a pore volume greater than or equal to 0.3 cm³/g, for example, greater than or equal to 0.4 cm³/g, for example, greater than or equal to 0.5 cm³/g, for example, greater than or equal to 0.6 cm³/g.

For example, the porous agar or agarose bead may have a flow velocity greater than or equal to 290 cm/h, for example, greater than or equal to 297 cm/h, for example, greater than or equal to 300 cm/h, for example, greater than or equal to 400 cm/h, for example, greater than or equal to 500 cm/h, for example, greater than or equal to 600 cm/h when a pressure reaches 0.1 MPa. Specifically, the Dv of the porous agar or agarose bead may be less than or equal to 65 µm, and at this time, the porous agar or agarose bead may have a flow velocity greater than or equal to 290 cm/h, for example, greater than or equal to 297 cm/h when the pressure reaches 0.1 MPa. In addition, the Dv of the porous agar or agarose bead may be greater than or equal to 90 µm, and at this time, the porous agar or agarose bead may have a flow velocity greater than or equal to 300 cm/h, for example, greater than or equal to 400 cm/h, for example, greater than or equal to 500 cm/h, for example, greater than or equal to 600 cm/h, for example, greater than or equal to 700 cm/h when a pressure of 0.1 MPa is reached.

Through the control of the three factors as described above, the agar or agarose bead may acquire very excellent durability under a high-pressure condition such as 0.1 MPa for each volume average diameter thereof while having a porous structure.

### [Mode for Invention]

Hereinafter, the embodiments of the present invention described above will be described in more detail through Examples. However, the following Examples are for illustrative purposes only and do not limit the scope of the present invention.

### Preparation of a porous agarose bead

### Example 1-1

402 g of an agarose powder is put into 5000 g of ultrapure water and dissolved at 110°C for 8 hours to prepare an aqueous solution of agarose. After 12000 g of toluene at 70°C is introduced into 5402 g of the said aqueous solution of agarose, and 1361 g of an aqueous surfactant solution at 70°C represented by Chemical Formula A below (361 g of a surfactant dissolved in 1000 g of ultrapure water) is subsequently introduced, the spherical agarose gel obtained through a polymerization reaction (250 rpm, 2-hour reaction) is washed with water and recovered. Subsequently, a first crosslinking agent and a second crosslinking agent were sequentially introduced to manufacture porous agarose beads, and then only the beads having a Dv50 less than or equal to 65 µm were selected using a particle size analyzer (Malvern, Mastersizer3000). Allyl bromide was used as the first crosslinking agent, and bromine was used as the second crosslinking agent.

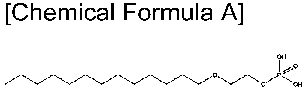

### Example 1-2

The same procedure as in Example 1-1 was performed, except that an aqueous solution of agarose was prepared by dissolving 1000 g of an agarose powder in 5000 g of ultrapure water.

### Example 1-3

The same procedure as in Example 1-1 was performed, except that an aqueous solution of agarose was prepared by dissolving 1075 g of an agarose powder in 5000 g of ultrapure water.

### Example 1-4

The same procedure as in Example 1-1 was performed, except that an aqueous solution of agarose was prepared by dissolving 356 g of an agarose powder in 5000 g of ultrapure water.

### Example 1-5

The same procedure as in Example 1-1 was performed, except that an aqueous agarose solution was prepared at 100°C instead of 110°C.

### Example 1-6

The same procedure as in Example 1-1 was performed, except that toluene at 50°C was used instead of 70°C.

### Example 1-7

The same procedure as in Example 1-1 was performed, except that toluene at 90°C was used instead of 70°C.

### Example 1-8

The same procedure as in Example 1-1 was performed, except that toluene at 40°C was used instead of 70°C.

### Example 1-9

The same procedure as in Example 1-1 was performed, except that toluene at 100°C was used instead of 70°C.

### Example 1-10

The same procedure as in Example 1-1 was performed, except that toluene at 60°C was used instead of 70°C, and an aqueous surfactant solution at 60°C was used instead of 70°C.

### Example 1-11

The same procedure as in Example 1-1 was performed, except that a surfactant represented by the following Chemical Formula C was used instead of Chemical Formula A.

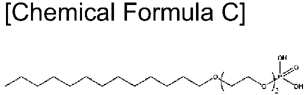

### Example 1-12

The same procedure as in Example 1-1 was performed, except that the input order of the first crosslinking agent and the second crosslinking agent was reversed.

### Example 1-13

The same procedure as in Example 1-1 was performed, except that an epichlorohydrin crosslinking agent was introduced alone instead of the first crosslinking agent and the second crosslinking agent.

### Example 1-14

The same procedure as in Example 1-1 was performed, except that the second crosslinking agent was not used.

### Example 1-15

The same procedure as in Example 1-1 was performed, except that the first crosslinking agent was not used.

### Example 1-16

The same procedure as in Example 1-1 was performed, except that Cl₂ was used instead of bromine as the second crosslinking agent.

### Example 1-17

The same procedure as in Example 1-16 was performed, except that an epichlorohydrin crosslinking agent was used as the first crosslinking agent.

### Comparative Example 1

The same procedure as in Example 1-1 was performed, except that the surfactant was dissolved in toluene instead of ultrapure water.

### Example 2-1

The same procedure as in Example 1-1 was performed, except that only beads having a Dv50 of greater than or equal to 90 µm were selected using a particle size analyzer (Malvern, Mastersizer3000).

### Example 2-2

The same procedure as in Example 2-1 was performed, except that an aqueous agarose solution was prepared by dissolving 1000 g of agarose powder in 5000 g of ultrapure water.

### Example 2-3

The same procedure as in Example 2-1 was performed, except that an aqueous agarose solution was prepared by dissolving 1075 g of agarose powder in 5000 g of ultrapure water.

### Example 2-4

The same procedure as in Example 2-1 was performed, except that an aqueous agarose solution was prepared by dissolving 356 g of agarose powder in 5000 g of ultrapure water.

### Example 2-5

The same procedure as in Example 2-1 was performed, except that the aqueous agarose solution was prepared at 100°C instead of 110°C.

### Example 2-6

The same procedure as in Example 2-1 was performed, except that toluene at 50°C was used instead of 70°C.

### Example 2-7

The same procedure as in Example 2-1 was performed, except that toluene at 90°C was used instead of 70°C.

### Example 2-8

The same procedure as in Example 2-1 was performed, except that toluene at 40°C was used instead of 70°C.

### Example 2-9

The same procedure as in Example 2-1 was performed, except that toluene at 100°C was used instead of 70°C.

### Example 2-10

The same procedure as in Example 2-1 was performed, except that toluene at 60°C was used instead of 70°C, and an aqueous surfactant solution at 60°C was used instead of 70°C.

### Example 2-11

The same procedure as in Example 2-1 was performed, except that a surfactant represented by the following Chemical Formula C was used instead of Chemical Formula A.

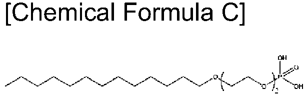

### Example 2-12

The same procedure as in Example 2-1 was performed, except that the input order of the first crosslinking agent and the second crosslinking agent was reversed.

### Example 2-13

The same procedure as in Example 2-1 was performed, except that an epichlorohydrin crosslinking agent was added alone instead of the first crosslinking agent and the second crosslinking agent.

### Example 2-14

The same procedure as in Example 2-1 was performed, except that the second crosslinking agent was not used.

### Example 2-15

The same procedure as in Example 2-1 was performed, except that the first crosslinking agent was not used.

### Example 2-16

The same procedure as in Example 2-1 was performed, except that Cl₂ was used instead of bromine as the second crosslinking agent.

### Example 2-17

The same procedure as in Example 2-16 was performed, except that an epichlorohydrin crosslinking agent was used as the first crosslinking agent.

### Comparative Example 2

The same procedure as in Example 2-1 was performed, except that the surfactant was dissolved in toluene instead of ultrapure water.

### Preparation of porous agar bead

### Example 3-1

The same procedure as in Example 1-1 was performed, except that an aqueous agar solution was prepared by dissolving 388 g of agar powder in 5000 g of ultrapure water instead of 402 g of agarose powder.

### Example 3-2

The same procedure as in Example 3-1 was performed, except that an aqueous agarose solution was prepared by dissolving 620 g of agar powder in 5000 g of ultrapure water.

### Example 3-3

The same procedure as in Example 3-1 was performed, except that an aqueous solution of agarose was prepared by dissolving 628 g of agar powder in 5000 g of ultrapure water.

### Example 3-4

The same procedure as in Example 3-1 was performed, except that an aqueous solution of agarose was prepared by dissolving 380 g of agar powder in 5000 g of ultrapure water.

### Example 3-5

The same procedure as in Example 3-1 was performed, except that an aqueous solution of agarose was prepared at 100°C instead of 110°C.

### Example 3-6

The same procedure as in Example 3-1 was performed, except that toluene at 50°C was used instead of 70°C.

### Example 3-7

The same procedure as in Example 3-1 was performed, except that toluene at 90°C was used instead of 70°C.

### Example 3-8

The same procedure as in Example 3-1 was performed, except that toluene at 40°C was used instead of 70°C.

### Example 3-9

The same procedure as in Example 3-1 was performed, except that toluene at 100°C was used instead of 70°C.

### Example 3-10

The same procedure as in Example 3-1 was performed, except that toluene at 60°C was used instead of 70°C, and an aqueous surfactant solution at 60°C was used instead of 70°C.

### Example 3-11

The same procedure as in Example 3-1 was performed, except that a surfactant represented by Chemical Formula C was used instead of Chemical Formula A.

### Example 3-12

The same procedure as in Example 3-1 was performed, except that the input order of the first crosslinking agent and the second crosslinking agent was reversed.

### Example 3-13

The same procedure as in Example 3-1 was performed, except that an epichlorohydrin crosslinking agent was introduced alone instead of the first crosslinking agent and the second crosslinking agent.

### Example 3-14

The same procedure as in Example 3-1 was performed, except that the second crosslinking agent was not used.

### Example 3-15

The same procedure as in Example 3-1 was performed, except that the first crosslinking agent was not used.

### Example 3-16

The same procedure as in Example 3-1 was performed, except that Cl₂ was used instead of bromine as the second crosslinking agent.

### Example 3-17

The same procedure as in Example 3-16 was performed, except that an epichlorohydrin crosslinking agent was used as the first crosslinking agent.

### Comparative Example 3

The same procedure as in Example 3-1 was performed, except that the surfactant was dissolved in toluene instead of ultrapure water.

### Example 4-1

The same procedure as in Example 2-1 was performed, except that an aqueous agar solution was prepared by dissolving 388 g of agar powder in 5000 g of ultrapure water instead of 402 g of agarose powder.

### Example 4-2

The same procedure as in Example 4-1 was performed, except that an aqueous agarose solution was prepared by dissolving 620 g of agar powder in 5000 g of ultrapure water.

### Example 4-3

The same procedure as in Example 4-1 was performed, except that an aqueous agarose solution was prepared by dissolving 628 g of agar powder in 5000 g of ultrapure water.

### Example 4-4

The same procedure as in Example 4-1 was performed, except that an aqueous agarose solution was prepared by dissolving 380 g of agar powder in 5000 g of ultrapure water.

### Example 4-5

The same procedure as in Example 4-1 was performed, except that an aqueous agarose solution was prepared at 100°C instead of 110°C.

### Example 4-6

The same procedure as in Example 4-1 was performed, except that toluene at 50°C was used instead of 70°C.

### Example 4-7

The same procedure as in Example 4-1 was performed, except that toluene at 90°C was used instead of 70°C.

### Example 4-8

The same procedure as in Example 4-1 was performed, except that toluene at 40°C was used instead of 70°C.

### Example 4-9

The same procedure as in Example 4-1 was performed, except that toluene at 100°C was used instead of 70°C.

### Example 4-10

The same procedure as in Example 4-1 was performed, except that toluene at 60°C was used instead of 70°C, and an aqueous surfactant solution at 60°C was used instead of 70°C.

### Example 4-11

The same procedure as in Example 4-1 was performed, except that a surfactant represented by Chemical Formula C was used instead of Chemical Formula A.

### Example 4-12

The same procedure as in Example 4-1 was performed, except that the input order of the first crosslinking agent and the second crosslinking agent was reversed.

### Example 4-13

The same procedure as in Example 4-1 was performed, except that an epichlorohydrin crosslinking agent was introduced alone instead of the first crosslinking agent and the second crosslinking agent.

### Example 4-14

The same procedure as in Example 4-1 was performed, except that the second crosslinking agent was not used.

### Example 4-15

The same procedure as in Example 4-1 was performed, except that the first crosslinking agent was not used.

### Example 4-16

The same procedure as in Example 4-1 was performed, except that Cl₂ was used instead of bromine as the second crosslinking agent.

### Example 4-17

The same procedure as in Example 4-16 was performed, except that an epichlorohydrin crosslinking agent was used as the first crosslinking agent.

### Comparative Example 4

The same procedure as in Example 4-1 was performed, except that the surfactant was dissolved in toluene instead of ultrapure water.

### Evaluation 1: Evaluation of pore volume

The porous beads according to the Examples and Comparative Examples were freeze-dried, and the pore volume of the porous beads was measured by a specific surface area (BET) analysis method using a gas adsorption method, and the results are shown in Tables 2 to 5 below.

### Evaluation 2: Evaluation of rigidity

For the porous beads according to the Examples and Comparative Examples, using FPLC equipment, the flow velocity was constantly increased, thereby increasing the pressure, and the flow velocity when the pressure reached 0.1 MPa was measured, and the results are shown in Tables 2 to 5 below. Since a higher flow velocity value means that the porous bead withstood a high pressure that much better, a high flow velocity value may indicate that the durability of the porous bead is excellent.

**[Table 2]**

| | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|
| Flow velocity (cm/h) | 321.0 2 | 320.2 4 | 309.4 5 | 308.8 9 | 304.7 5 | 319.3 3 | 319.8 0 | 301.2 5 | 301.11 |
| Pore volume (cm3/g) | 0.345 9 | 0.344 2 | 0.309 2 | 0.301 0 | 0.299 6 | 0.341 5 | 0.347 7 | 0.298 3 | 0.2960 |

| | Example 1-10 | Example 1-11 | Example 1-12 | Example 1-13 | Example 1-14 | Example 1-15 | Example 1-16 | Example 1-17 | Comparative Example 1 |
|---|---|---|---|---|---|---|---|---|---|
| Flow velocity (cm/h) | 320.9 8 | 296.7 1 | 299.1 3 | 296.8 6 | 300.1 0 | 299.8 7 | 299.5 9 | 299.3 7 | 290.45 |
| Pore volume (cm3/g) | 0.342 1 | 0.256 2 | 0.280 8 | 0.285 9 | 0.290 4 | 0.290 1 | 0.285 0 | 0.289 8 | 0.182 |

**[Table 3]**

| | Exam ple 2-1 | Exam ple 2-2 | Exam ple 2-3 | Exam ple 2-4 | Exam ple 2-5 | Exam ple 2-6 | Exam ple 2-7 | Exam ple 2-8 | Example 2-9 |
|---|---|---|---|---|---|---|---|---|---|
| Flow velocity(c m/h) | 611.3 7 | 609.9 4 | 604.1 2 | 604.5 9 | 602.4 8 | 610.3 3 | 611.5 2 | 602.7 5 | 601.63 |
| Pore volume(c m3/g) | 0.534 0 | 0.516 0 | 0.508 8 | 0.500 9 | 0.488 8 | 0.504 1 | 0.509 3 | 0.494 2 | 0.4823 |

| | Exam ple 2-10 | Exam ple 2-11 | Exam ple 2-12 | Exam ple 2-13 | Exam ple 2-14 | Exam ple 2-15 | Exam ple 2-16 | Exam ple 2-17 | Compar ative Example 2 |
|---|---|---|---|---|---|---|---|---|---|
| Flow velocity(c m/h) | 610.8 3 | 598.8 8 | 600.2 0 | 599.0 3 | 602.1 9 | 600.0 3 | 600.2 3 | 599.3 8 | 509.16 |
| Pore volume(c m3/g) | 0.518 5 | 0.477 2 | 0.500 1 | 0.490 8 | 0.492 4 | 0.495 5 | 0.493 9 | 0.498 9 | 0.3924 |

**[Table 4]**

| | Exam ple 3-1 | Exam ple 3-2 | Exam ple 3-3 | Exam ple 3-4 | Exam ple 3-5 | Exam ple 3-6 | Exam ple 3-7 | Exam ple 3-8 | Example 3-9 |
|---|---|---|---|---|---|---|---|---|---|
| Flow velocity(c m/h) | 326.2 1 | 325.0 1 | 313.4 4 | 312.1 7 | 308.9 7 | 325.8 0 | 324.9 6 | 305.1 6 | 305.91 |
| Pore volume(c m3/g) | 0.384 1 | 0.380 8 | 0.338 4 | 0.330 2 | 0.334 8 | 0.374 7 | 0.373 7 | 0.330 4 | 0.3309 |

| | Exam ple 3-10 | Exam ple 3-11 | Exam ple 3-12 | Exam ple 3-13 | Exam ple 3-14 | Exam ple 3-15 | Exam ple 3-16 | Exam ple 3-17 | Compar ative Example 3 |
|---|---|---|---|---|---|---|---|---|---|
| Flow velocity(c m/h) | 325.3 2 | 300.9 4 | 304.0 2 | 300.9 3 | 304.2 3 | 303.3 9 | 304.0 8 | 303.0 4 | 293.88 |
| Pore volume(c m3/g) | 0.380 7 | 0.295 0 | 0.319 7 | 0.319 0 | 0.326 8 | 0.321 9 | 0.327 0 | 0.315 2 | 0.215 |

**[Table 5]**

| | Example 4-1 | Example 4-2 | Example 4-3 | Example 4-4 | Example 4-5 | Example 4-6 | Example 4-7 | Example 4-8 | Example 4-9 |
|---|---|---|---|---|---|---|---|---|---|
| Flow velocity (cm/h) | 749 | 746 | 729 | 728 | 708 | 744 | 748 | 704 | 703 |
| Pore volume (cm3/g) | 0.628 3 | 0.615 6 | 0.593 1 | 0.593 5 | 0.586 7 | 0.622 5 | 0.628 1 | 0.592 4 | 0.5939 |

| | Example 4-10 | Example 4-11 | Example 4-12 | Example 4-13 | Example 4-14 | Example 4-15 | Example 4-16 | Example 4-17 | Comparative Example 4 |
|---|---|---|---|---|---|---|---|---|---|
| Flow velocity (cm/h) | 746 | 703 | 713 | 708 | 704 | 702 | 696 | 698 | 482 |
| Pore volume (cm3/g) | 0.625 1 | 0.580 8 | 0.592 7 | 0.594 7 | 0.597 7 | 0.593 9 | 0.588 0 | 0.590 3 | 0.5024 |

From Tables 2 to 5, it may be confirmed that the porous beads according to the Examples are controlled to have a pore volume greater than or equal to 0.25 cm3/g compared to the porous beads according to the Comparative Examples, thereby also having very excellent durability. In particular, as it may be seen that a pore volume and a flow velocity of the porous bead vary depending on various conditions of various process steps when using the aqueous surfactant solution, it may be seen that a porous bead having excellent durability may be manufactured only by sensitively controlling various process conditions when manufacturing an agar or agarose bead using the aqueous surfactant solution. Furthermore, when using the aqueous surfactant solution, it may also be confirmed that a porous agar bead manufactured using an aqueous agar solution has much better durability than a porous agarose bead manufactured using an aqueous agarose solution. In addition, it may also be confirmed that the porous agar or agarose bead having a Dv50 less than or equal to 65 µm has more excellent durability as it sequentially satisfies Equation 1, Equation 2, and Equation 3, and the porous agar or agarose bead having a Dv50 greater than or equal to 90 µm has more excellent durability as it sequentially satisfies Equation 4, Equation 5, and Equation 6.

Although preferred embodiments of the present invention have been described in detail above, the scope of the present invention is not limited thereto, and various modifications and improved forms by those skilled in the art using the basic concept of the present invention defined in the following claims also fall within the scope of the present invention

## Claims

1. A method for manufacturing a porous agar or agarose bead, comprising:
preparing an aqueous solution of agar or agarose by dissolving agar or agarose in water;
polymerizing by introducing an organic solvent and an aqueous surfactant solution into the aqueous solution of agar or agarose;
manufacturing a spherical agar or agarose gel by solidifying an emulsion formed by the polymerization reaction;
washing and recovering the agar or agarose gel; and obtaining an agar or agarose bead by crosslinking the agar or agarose gel.

2. The method for manufacturing a porous agar or agarose bead of claim 1, wherein the polymerizing includes:
introducing the organic solvent into the aqueous solution of agar or agarose; and introducing the aqueous surfactant solution after introducing the organic solvent.

3. The method for manufacturing a porous agar or agarose bead of claim 1, wherein the surfactant
includes a water-soluble group.

4. The method for manufacturing a porous agar or agarose bead of claim 3, wherein the surfactant including the water-soluble group is represented by Chemical Formula 1 below:
[Chemical Formula 1] R¹-O-L¹-O-R²
in Chemical Formula 1,
R1 is a substituted or unsubstituted C1 to C20 alkyl group,
R², being a water-soluble group, is *-P(=O)(OH)₂, and L1 is a substituted or unsubstituted C1 to C20 alkylene group.

5. The method for manufacturing a porous agar or agarose bead of claim 1, wherein the aqueous solution of agar or agarose is a mixed solution of water and an agar or agarose powder, and the water and the agar or agarose powder in the mixed solution have a weight ratio of 14:1 to 5:1.

6. The method for manufacturing a porous agar or agarose bead of claim 1, wherein the aqueous surfactant solution is a mixed solution of water and the surfactant, and the water and the surfactant in the mixed solution have a weight ratio of 2:1 to 10:1.

7. The method for manufacturing a porous agar or agarose bead of claim 1, wherein the organic solvent used in the polymerizing is introduced into the aqueous solution of agar or agarose at a weight less than or equal to 10 times the weight of the aqueous surfactant solution.

8. The method for manufacturing a porous agar or agarose bead of claim 1, wherein the organic solvent includes toluene.

9. The method for manufacturing a porous agar or agarose bead of claim 1, wherein the emulsion is a water-in-oil emulsion.

10. The method for manufacturing a porous agar or agarose bead of claim 1, wherein the crosslinking of the agar or agarose gel includes:
introducing a first crosslinking agent to the agar or agarose gel, and subsequently introducing a second crosslinking agent
.

11. The method for manufacturing a porous agar or agarose bead of claim 10, wherein the first crosslinking agent and the second crosslinking agent have different structures from each other.

12. The method for manufacturing a porous agar or agarose bead of claim 11, wherein the first crosslinking agent and the second crosslinking agent each independently include a halogen element.

13. The method for manufacturing a porous agar or agarose bead of claim 12, wherein the first crosslinking agent is represented by Chemical Formula 2 below:
[Chemical Formula 2] CH₂=CH-L²-X
in Chemical Formula 2,
L2 is a substituted or unsubstituted C1 to C20 alkylene group, and X is a halogen element.

14. The method for manufacturing a porous agar or agarose bead of claim 12, wherein the second crosslinking agent is represented by Chemical Formula 3 below:
[Chemical Formula 3] X₂
in Chemical Formula 3, X is a halogen element.

15. The method for manufacturing a porous agar or agarose bead of claim 12, wherein the halogen element is Br.

16. A porous agar or agarose bead satisfying Equation 1 below. $84 < \left(A\times B\right) + 0.84$
(A: flow velocity when a pressure reaches 0.1 MPa (unit is cm/h)
B: average pore volume (unit is cm³/g)

17. The porous agar or agarose bead of claim 16, wherein the porous agar or agarose bead satisfies Equation 2 below. $300 < A - B$
(A: flow velocity when a pressure reaches 0.1 MPa (unit is cm/h)
B: average pore volume (unit is cm³/g)

18. The porous agar or agarose bead of claim 17, wherein the porous agar or agarose bead satisfies Equation 3 below. $306 < A + B$
(A: flow velocity when a pressure reaches 0.1 MPa (unit is cm/h)
B: average pore volume (unit is cm³/g)

19. The porous agar or agarose bead of claim 16, wherein pores in the porous agar or agarose bead have a pore volume greater than or equal to 0.2 cm³/g.

20. A porous agar or agarose bead manufactured by the method according to any one of claims 1 to 15.

21. A porous agar or agarose bead having a Dv50 less than or equal to 65 µm and satisfying Equation 1 below. $84 < \left(A\times B\right) + 0.84$
(A: flow velocity when a pressure reaches 0.1 MPa (unit is cm/h)
B: average pore volume (unit is cm³/g)

22. The porous agar or agarose bead of claim 21, wherein the porous agar or agarose bead satisfies Equation 2 below. $300 < A - B$
(A: flow velocity when a pressure reaches 0.1 MPa (unit is cm/h)
B: average pore volume (unit is cm³/g)

23. The porous agar or agarose bead of claim 22, wherein the porous agar or agarose bead satisfies Equation 3 below. $306 < A + B$
(A: flow velocity when a pressure reaches 0.1 MPa (unit is cm/h)
B: average pore volume (unit is cm³/g)

24. A porous agar or agarose bead having a Dv50 greater than or equal to 90 µm and satisfying Equation 4 below. $300 < \left(A\times B\right) + 15$
(A: flow velocity when a pressure reaches 0.1 MPa (unit is cm/h)
B: average pore volume (unit is cm³/g)

25. The porous agar or agarose bead of claim 24, wherein the porous agar or agarose bead has a Dv50 of 90 µm to 150 µm.

26. The porous agar or agarose bead of claim 24, wherein the porous agar or agarose bead satisfies Equation 2 below. $690 < A - B$
(A: flow velocity when a pressure reaches 0.1 MPa (unit is cm/h)
B: average pore volume (unit is cm³/g))

27. The porous agar or agarose bead of claim 24, wherein the porous agar or agarose bead satisfies Equation 6 below. $744 < A + B$
(A: flow velocity when a pressure reaches 0.1 MPa (unit is cm/h)
B: average pore volume (unit is cm³/g)
